# EUROPEAN PATENT SPECIFICATION

(11) **EP 3 517 279 B1**
(45) Date of publication and mention of the grant of the patent: **03.07.2024**
(21) Application number: 19154295.0
(22) Date of filing: 29.01.2019
(51) Int. Cl.: B29C 65/20, E06B 3/96, B29K 27/06

(54) **AN APPARATUS FOR WELDING PROFILED BARS**
VORRICHTUNG ZUM VERSCHWEISSEN VON PROFILSTÄBEN
APPAREIL DE SOUDAGE DE BARRES PROFILÉES

(30) Priority: 30.01.2018 IT 201800002154
(43) Date of publication of application: 31.07.2019
(73) Proprietor: Emmegi S.p.A., 41019 Soliera (Modena) (IT)
(72) Inventor: MASETTI, Goffredo, 61122 Pesaro (IT); BARBIERI, Gianni, 61032 Fano (IT); DIONIGI, Roberto, 61020 Montecalvo in Foglia (IT)
(74) Representative: Colò, Chiara

(56) References cited:
- WO-A1-2017/137466
- DE-A1- 2 201 656
- DE-A1-102015 013 439
- DE-A1-102016 102 240
- DE-U1-202015 000 908
- US-A- 6 119 752

## Description

The invention relates to an apparatus for joining profiled bars together by welding, particularly for the purpose of obtaining door and window frames. The apparatus according to the invention is particularly suitable for joining profiled bars made of polyvinyl chloride (PVC), but can also be used to join together profiled bars made of a polymeric material other than PVC, or made of a composite material, or provided with reinforcement elements made of metal material. In general, the apparatus according to the invention may be used to join together profiled bars which can be welded to each other by applying heat and pressure.

In recent years, PVC doors and windows have become widely disseminated in the building industry; the PVC doors and windows use frames made from profiled bars cut to a desired length and joined together by welding. During welding, the ends of two profiled PVC bars are heated so that the material they consist of is softened locally and they are then pressed against each other in order to join the bars permanently. In this manner, a weld bead in the form of a swelling is generated in the joining zone between the profiled bars.

The weld bead is considerably unattractive from an aesthetic viewpoint on a window or door frame. It is thus eliminated in a special machine, called a cleaning machine, located downstream of the welding machine in which the profiled bars have been joined together.

It is desirable to find a way to weld profiled bars together so as to obtain a joining zone between the ends of the profiled bars that is free of visible weld beads.

If, in fact, it were possible to avoid generating visible weld beads, the production of window and door frames would be considerably simplified, since it would no longer be necessary to remove the weld bead on the cleaning machine. This would also make it possible to obtain a shorter window and door frame production line compared to traditional production lines, since the cleaning machine would no longer be necessary.

Furthermore, generating joining zones in which the weld bead is not visible would be particularly useful in the case of the window and door frames that are presently coming into the market and are provided with special finishes, such as, for example, printed polymer films, wood films, fabric films or particular coatings applied on the profiled bar prior to welding. In these cases, subjecting the frame to a traditional cleaning operation of the weld bead means irreparably damaging the special finish of the profiled bars, with consequent aesthetic effects of poor quality.

Examples of prior art apparatuses are disclosed in DE2201656, DE202015000908U, US6119752, WO2017/137466, DE102016102240, DE102015013439.

An object of the invention is to improve the apparatuses for joining together profiled bars by welding, particularly in order to obtain window and door frames.

A further object is to provide an apparatus for welding profiled bars so as to obtain a welded product, while generating a weld bead that is as little visible as possible from the outside of the product.

Another object is to provide an apparatus for welding profiled bars which is capable of minimising the visibility of the weld bead, without, however, excessively complicating the structure of the welding machine.

According to the invention, there are provided an apparatus as claimed in claim 1 and a method as claimed in claim 14.

Owing to the containing element, it is possible to join the profiled bar to the further profiled bar while containing the softened material of the terminal sections in a desired space. It is thus possible to create, in a joining zone between the profiled bar and the further profiled bar, a weld bead that does not substantially protrude from a surface of the welded product intended to remain exposed to view. It is thus no longer necessary to provide for further cleaning processes in order to eliminate the visible part of the weld bead.

The protuberance is suitable for being housed in a seat obtained near the terminal section of the corresponding profiled bar.

Owing to the protuberance, the floating element acts like a deflector capable of pushing the softened material effectively towards the inside of the profiled bar or of the further profiled bar and of simultaneously giving a desired conformation to the joining zone between the profiled bar and the further profiled bar.

The invention can be better understood and implemented with reference to the accompanying drawings, which illustrate a non-limiting exemplary embodiment thereof, in which:
Figure 1 is a partially exploded perspective view, showing a welding head for joining together two profiled bars;
Figure 2 is a perspective view like the one in Figure 1, showing the welding head in a working configuration;
Figure 3 is a schematic sectional view, showing a step of positioning two profiled bars to be welded;
Figure 4 is a schematic sectional view like the one in Figure 3, showing the profiled bars spaced apart from each other and arranged in a clamped position prior to welding;
Figure 5 is a schematic sectional view like the one in Figure 3, showing a step of softening respective terminal sections of the profiled bars;
Figure 5a is a schematic sectional view showing the step of Figure 5, according to an alternative embodiment;
Figure 6 is a schematic sectional view like the one in Figure 3, showing the profiled bars spaced apart from each other and having respective softened terminal sections;
Figure 7 is a schematic sectional view like the one in Figure 3, showing the profiled bars in an end-of-welding position;
Figure 8 is a schematic perspective view, showing end portions of two profiled bars joined together by welding.

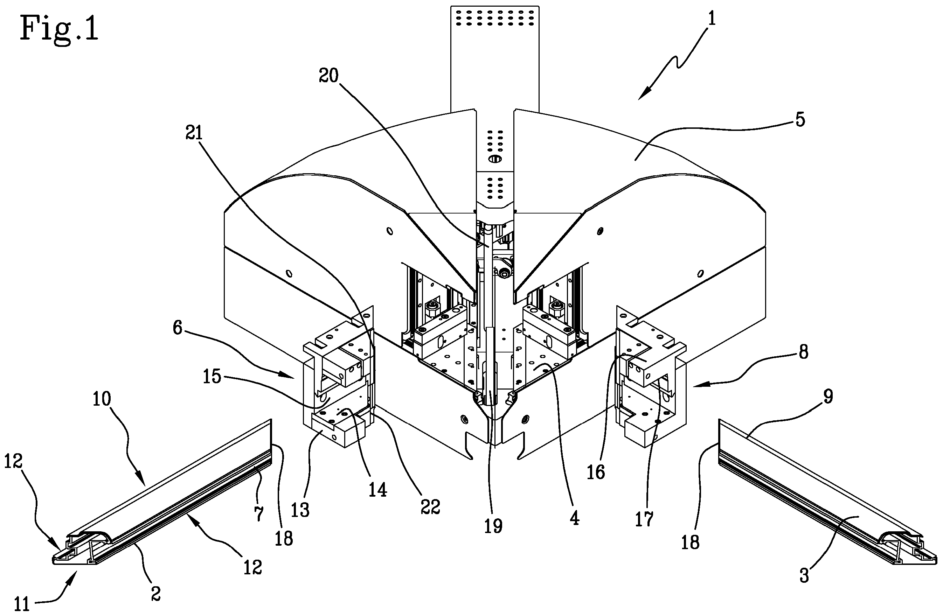

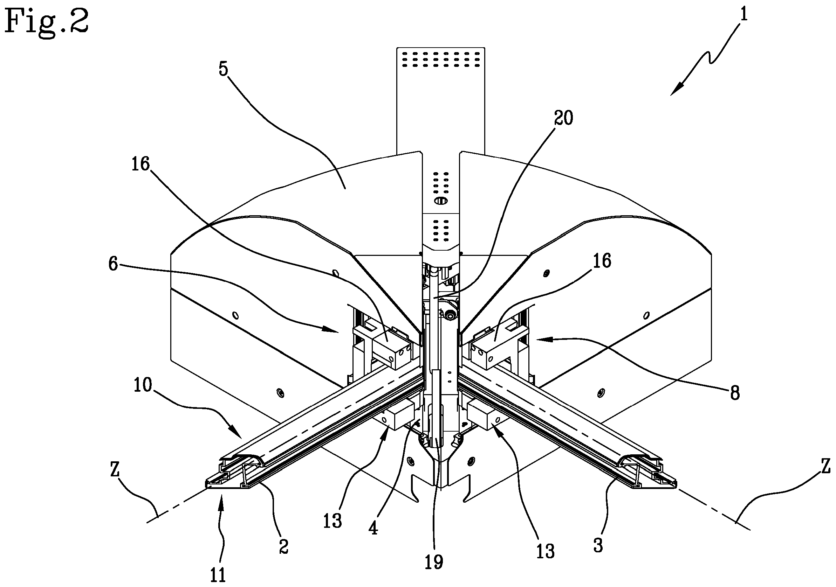

Figures 1 and 2 show a welding head 1 for joining together a profiled bar 2 and a further profiled bar 3 by welding. The profiled bar 2 and the further profiled bar 3 are intended, in particular, to form a window or door frame, after being joined to other two profiled bars, not illustrated.

The profiled bar 2 and the further profiled bar 3 can be made of polymeric material, particularly polyvinyl chloride (PVC). It is however possible to use the welding head 1 also to weld profiled bars made of polymeric materials other than PVC, or composite materials, or materials having an external structure made of PVC or another polymeric material and a metal internal reinforcement, for example made of aluminium.

Each profiled bar 2, 3 has a first face 10 and a second face 11, opposite the first face 10. The first face 10 is intended to be facing towards the outside environment, when the window or door frame formed by the profiled bars is installed in a building. The second face 11, by contrast, is intended to be facing towards the inside of a room after the installation of the door or window. Two lateral faces 12 are interposed between the first face 10 and the second face 11, the lateral faces 12 being one opposite the other. Whilst the first face 10 and the second face 11 are intended to remain exposed to view after the installation of the window or door in a building, the lateral faces 12 are not visible after installation.

In the example illustrated, the first face 10 is an upper face of the profiled bar 2 or, respectively, of the further profiled bar 3, whilst the second face 11 is a lower face of the profiled bar 2 or, respectively, of the further profiled bar 3. However, other arrangements of the first face 10 and of the second face 11 on the welding head 1 are possible. For example, the first face 10 could be turned downward, whereas the second face 11 could be turned upward on the welding head 1.

The first face 10, the second face 11 and the lateral faces 12 can have various shapes, not necessarily flat.

Each profiled bar 2, 3 extends along a corresponding longitudinal axis Z, which may be seen for example in Figure 2.

Both the profiled bar 2 and the further profiled bar 3 are internally hollow. The welding head 1 is configured to join the profiled bar 2 to the further profiled bar 3 so that the longitudinal axes Z of the profiled bar 2 and of the further profiled bar 3 are disposed transversely, in particular perpendicularly, to each other. The profiled bar 2 and the further profiled bar 3 are thus joined so as to define therebetween an angle, which, in the example illustrated, is of 90°.

In greater detail, the welding head 1 is configured to join the profiled bar 2 to the further profiled bar 3 along a joining perimeter that involves all of the faces of the profiled bar 2 and of the further profiled bar 3. In other words, the welding head 1 is configured to form, at the interface between the profiled bar 2 and the further profiled bar 3, a weld bead which extends in a joining zone between the first faces 10, in a joining zone between the second faces 11 and in a joining zone between the lateral faces 12 of the profiled bar 2 and of the further profiled bar 3.

The joining zone between the lateral faces 12 does not remain visible after the installation of the window or door obtained from the profiled bars 2, 3. Therefore, the presence of a weld bead in this joining zone does not normally create particular difficulties.

As will be better explained below, the welding head 1 makes it possible to minimise, or even prevent, the visibility of the weld bead, in particular on the first faces 10 and on the second faces 11 of the profiled bars 2, 3. The welding head 1 can be included in a welding machine comprising four welding heads, each of which is analogous to the welding head 1 shown in Figures 1 and 2. In this case the welding machine enables a window or door frame to be formed rapidly, since each welding head is arranged for joining, by welding, two adjacent profiled bars, so that the four corners of the frame are formed simultaneously.

Alternatively, the welding head 1 can be part of a welding machine comprising a single welding head 1, or comprising two welding heads 1.

The welding head 1 comprises a base 4 and a casing 5 arranged over the base 4. The base 4 is arranged for restingly receiving the profiled bars to be welded, by means of support devices, which will be described in detail further below. The casing 5 houses some mechanical devices and some electronic parts which enable welding of the profiled bars.

Positioned above the base 4 there is a support device 6, arranged for supporting an end portion 7 of the profiled bar 2. Also positioned above the base 4 is a further support device 8, arranged for supporting a further end portion 9 of the further profiled bar 3.

The support device 6 and the further support device 8 are also called "counterblocks".

The support device 6 and the further support device 8 are intended to be fixed to the base 4 by fixing means which can be, for example, of a magnetic type.

Each support device 6, 8 comprises a support element 13, suitable for supporting an end portion 7, 9 of the corresponding profiled bar 2, 3.

In particular, each support element 13, which can be, for example, "L"-shaped, is delimited by a support surface 14, suitable for supporting a face, particularly the second face 11, of a profiled bar 2, 3. The support surface 14 can be a flat surface, intended to be arranged horizontally during operation of the welding head 1.

Each support element 13 is further delimited by a rest surface 15, against which a lateral face 12 of a profiled bar 2, 3 can be rested. The rest surface 15, which can be flat or also have other geometries, is arranged vertically during operation of the welding head 1.

Each support device 6, 8 further comprises a clamping element 16 for clamping a profiled bar 2, 3 on a support device 6, 8. The clamping element 16 is movable relative to the support element 13 by a moving means, not illustrated, in a movement direction which, in the illustrated example, is vertical. The clamping element 16 is in particular movable between a disengagement position, in which a profiled bar 2, 3 can be moved freely between the support element 13 and the clamping element 16, and a clamping position, in which the clamping element 16 clamps the profiled bar 2, 3 against the support element 13, so as to prevent movements of the profiled bar 2, 3 relative to the corresponding support device 6, 8.

The clamping element 16 is suitable for engaging with the first face 10 of a profiled bar 2, 3. In particular, the clamping element 16 is delimited by a clamping surface 17, which, in the illustrated example, is arranged horizontally, suitable for abutting against the first face 10.

The support device 6 and the further support device 8 are movable relative to each other so as to move the end portion 7 and the further end portion 9 closer to one another, or, alternatively, away from one another. This is made possible by driving means and further driving means included in the welding head 1. The driving means and the further driving means act respectively on the support device 6 and on the further support device 8, after they have been positioned on the base 4, so as to move them away from each other or nearer to each other.

During operation of the welding head 1, the longitudinal axis Z of the profiled bar 2 is arranged transversely, in particular perpendicularly, to the longitudinal axis Z of the further profiled bar 3.

The welding head 1 enables the profiled bar 2 to be joined to the further profiled bar 3 at respective terminal sections 18, each of which is (in the illustrated example) arranged on a plane inclined by 45° relative to the longitudinal axis Z of the profiled bar 2 or of the further profiled bar 3.

The welding head 1 comprises an abutment element 19, shaped particularly like a plate, which can be inserted between the terminal sections 18 of the profiled bar 2 and of the further profiled bar 3 in a step of positioning the profiled bar 2 and the further profiled bar 3 on the welding head 1. In particular, the abutment element 19 can be inserted between the terminal sections 18 before clamping the profiled bar 2 and the further profiled bar 3 respectively in the support device 6 and in the further support device 8.

The welding head 1 further comprises a heating device which includes a heating element 20, shaped, for example, like a plate, suitable for being interposed between the terminal sections 18 of the profiled bar 2 and of the further profiled bar 3, so as to heat the material which forms the profiled bar 2 and the further profiled bar 3 at the terminal sections 18. The profiled bars 2, 3 are thus locally softened.

There are also provided pusher means for pushing the profiled bar 2 against the further profiled bar 3 so as to apply a pressure enabling the profiled bar 2 to be joined to the further profiled bar 3 at the respective terminal sections 18, where the material forming the profiled bars 2, 3 has been previously softened.

The pusher means can comprise the driving means and the further driving means, not illustrated, which move the support device 6 and the further support device 8 relative to each other.

The abutment element 19 and the heating element 20 are movable so that they can be inserted between the terminal sections 18 of the profiled bars 2, 3, or, alternatively, moved away from the terminal sections 18.

Each support device 6, 8 further comprises a pair of containing elements for locally containing the softened material of the profiled bars 2, 3 near the respective terminal sections 18, thereby preventing undesirable leaks of the material after the terminal sections 18 have interacted with the heating element 20.

In particular, for each support device 6, 8 there is provided an upper containing element 21 associated with the clamping element 16 and a lower containing element 22 associated with the support element 13. The upper containing element 21 is arranged for containing the softened material in a joining zone between the profiled bar 2 and the further profiled bar 3 on the first face 10. The lower containing element 22, on the other hand, is arranged for containing the softened material in a joining zone between the profiled bar 2 and the further profiled bar 3 on the second face 11.

Each containing element 21, 22 is mounted in a floating manner on the support device 6, 8, so as to be movable in a direction parallel to the longitudinal axis Z of the profiled bar 2 or of the further profiled bar 3. In particular, the upper containing element 21 is mounted in a floating manner relative to the clamping element 16, whilst the lower containing element 22 is mounted in a floating manner relative to the support element 13.

In order to assure that each containing element 21, 22 is mounted in a floating manner on the support device 6 or on the further support device 8, each containing element 21, 22 is associated with an elastic element 49, such as, for example, a spring, which pushes the corresponding containing element 21, 22 parallel to the longitudinal axis Z of the profiled bar 2 or of the further profiled bar 3. In particular, the elastic elements 49 of the support device 6 push the containing elements 21, 22 with which they are associated towards the further support device 8, i.e. they maintain the containing elements 21, 22 in an extended position. Analogously, the elastic elements 49 of the further support device 8 push the containing elements 21, 22 with which they are associated towards the support device 6.

The containing elements 21, 22 of the support device 6 can be moved, i.e. retracted, towards a central zone of the profiled bar 2, by applying to each containing element 21, 22 a force that is sufficient to overcome the resistance of the corresponding elastic element 49. Analogously, the containing elements 21, 22 of the further support device 8 can be moved towards a central zone of the further profiled bar 3 by applying to each containing element 21, 22 a force that is sufficient to overcome the resistance of the corresponding elastic element 49.

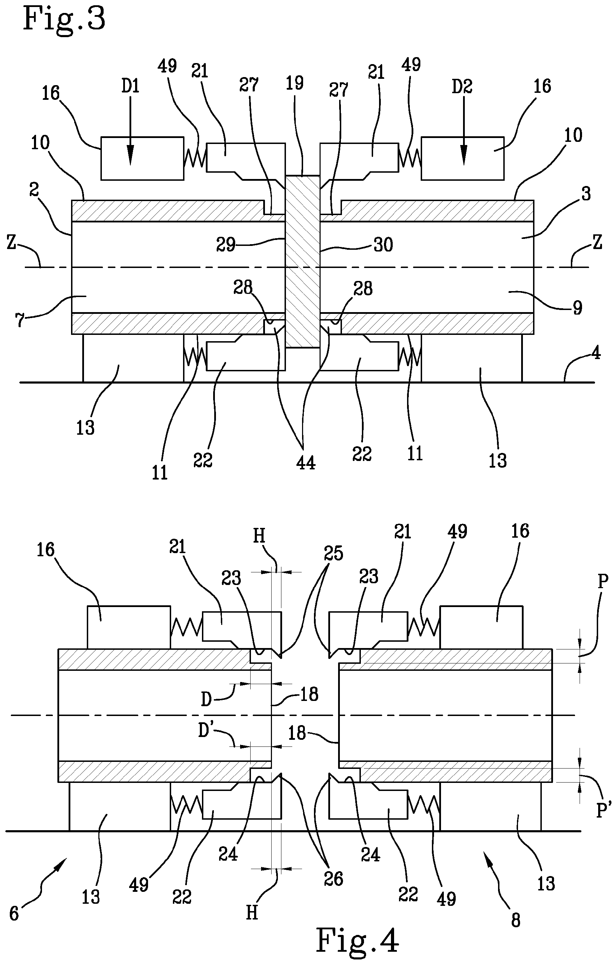

As shown in Figure 4, the upper containing elements 21 are each delimited by a first surface 23 arranged for facing, during use, the first face 10 of the profiled bar 2 or of the further profiled bar 3.

Analogously, each lower containing element 22 is delimited by a second surface 24 arranged for facing, during use, the second face 11 of the profiled bar 2 or of the further profiled bar 3.

In greater detail, the first surface 23 and the second surface 24 are slidable, with a small clearance, respectively along the first face 10 and the second face 11, when the corresponding containing element 21, 22 moves in a floating manner relative to a profiled bar 2, 3.

Each upper containing element 21 is provided with an upper protuberance 25 which projects from the first surface 23 towards the longitudinal axis Z of the corresponding profiled bar 2, 3, i.e. downwards in the illustrated example.

Analogously, each lower containing element 22 is provided with a lower protuberance 26 which projects from the second surface 24 towards the longitudinal axis Z of the corresponding profiled bar 2,3, i.e. upwards in the illustrated example.

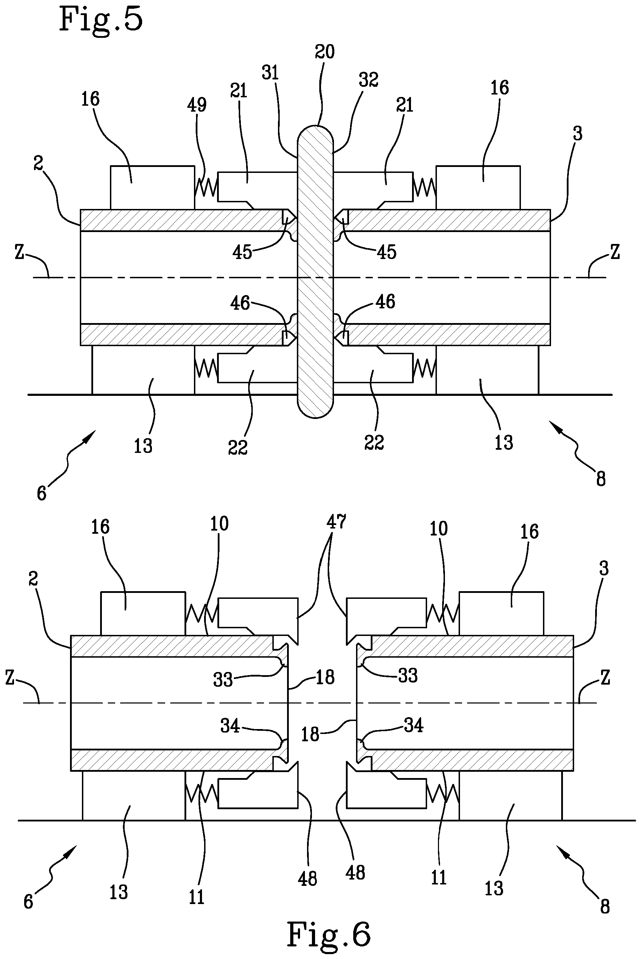

As shown in Figure 6, each upper containing element 21 is delimited by an upper abutment face 47 arranged transversely, in particular perpendicularly, to the corresponding first surface 23. The upper protuberance 25 is interposed between the upper abutment face 47 and the first surface 23.

Analogously, each lower containing element 22 is delimited by a lower abutment face 48 arranged transversely, in particular perpendicularly, to the corresponding second surface 24. The lower protuberance 26 is interposed between the lower abutment face 48 and the second surface 24.

Each upper protuberance 25 is suitable for being received in an upper seat 27, shown in Figure 3, provided near the terminal section 18 of the profiled bar 2 or of the further profiled bar 3.

The upper seat 27 is obtained by removing material, for example by milling, from the first face 10 of the profiled bar 2 or of the further profiled bar 3. The thickness of the first face 10 is thus reduced in the upper seat 27. In fact, as shown in Figure 4, the upper seat 27 has a depth P that is less than the thickness of the material of the profiled bar 2, 3.

The upper seat 27 extends on the first face 10, in a direction perpendicular to the longitudinal axis Z of the corresponding profiled bar 2, 3, for a length equal to the length of the zone along which it is desired that the profiled bar 2 be joined to the further profiled bar 3 substantially without seeing the weld bead.

Furthermore, each upper seat 27 extends, starting from the terminal section 18, for a predefined dimension D in a direction parallel to the longitudinal axis Z of the profiled bar 2, 3.

Analogously, each lower protuberance 26 is suitable for being received in a lower seat 28, likewise shown in Figure 3, obtained by removing material, for example by milling, from the second face 11 of the profiled bar 2 or of the further profiled bar 3, near the respective terminal section 18. The lower seat 28 also extends on the second face 11, in a direction perpendicular to the longitudinal axis Z of the corresponding profiled bar 2, 3, for a length equal to the length of the zone along which it is desired that the profiled bar 2 be joined to the further profiled bar 3 substantially without seeing the weld bead.

Furthermore, the lower seat 28 has a depth P' and a dimension D', measured parallel to the longitudinal axis Z of the profiled bar 2, 3, which are analogous or equal to the depth P and dimension D of the upper seat 27.

The operation of the welding head 1 will now be described with reference to Figures 3 to 7. These Figures are schematic cross sections, each of which is taken along the vertical planes containing the longitudinal axes Z of the profiled bar 2 and, respectively, of the profiled bar 3. The cross-sectional planes were subsequently each rotated by 45° away from each other so as to obtain a cross section lying in the same plane as the sheet. The profiled bar 2 and the further profiled bar 3 are preliminarily prepared by cutting them to the desired length and defining terminal sections 18 according to the desired conformation. In the example in Figures 1 and 2, the profiled bars 2, 3 are cut at 45° relative to the corresponding longitudinal axis Z, so as to define terminal sections 18, each of which lies in a plane inclined by 45° relative to the longitudinal axis Z of the respective profiled bar 2, 3.

After cutting, the upper seat 27 is made on the first face 10 of each profiled bar 2, 3, whilst the lower seat 28 is made on the second face 11 of each profiled bar 2, 3.

As will be better described below, the upper seat 27 and the lower seat 28 have the function of receiving the material of the weld bead that will be formed in a joining zone between the profiled bars 2, 3 respectively on the first faces 10 and on the second faces 11.

The upper seat 27 and the lower seat 28 are formed upstream of the welding head 1, in particular upstream of the welding machine in which the welding head 1 is included.

In this manner it is possible to avoid complications in the structure of the welding head 1 and/or of the welding machine, which do not need to comprise complicated devices for the removal of material, or devices for the removal of shavings.

The profiled bar 2 and the further profiled bar 3 are then positioned on the welding head 1. In particular, as shown in Figure 3, the profiled bar 2 is rested upon the support element 13 of the support device 6, whilst the further profiled bar 3 is rested upon the support element 13 of the further support device 8.

Both the clamping element 16 of the support device 6 and the clamping element 16 of the further support device 8 are still in the disengagement position, in which the profiled bars 2, 3 are free to move relative to the clamping element 16 and the support element 13 of the corresponding support device 6, 8.

The first surface 23 of each upper containing element 21 is far from the first face 10 of the profiled bar 2 or of the further profiled bar 3. The second surface 24 of each lower containing element 22 is instead arranged almost in contact with the second face 11 of the profiled bar 2 or of the further profiled bar 3, so that between the second face 11 and the second surface 24 a clearance of a few tenths of a millimetre remains, which enables the lower containing element 22 to move relative to the profiled bar 2, 3 without damaging the latter.

The abutment element 19 now comes out from the casing 5 and is brought into an operating position in which it is interposed between the terminal sections 18 of the profiled bars 2, 3.

The profiled bar 2 is moved towards the abutment element 19, until the corresponding terminal section 18 abuts against an abutment surface 29 of the abutment element 19. The further profiled bar 3 is also moved in such a way that the corresponding terminal section 18 abuts against a further abutment surface 30 of the abutment element 19. The abutment surface 29 is opposite the further abutment surface 30. The abutment surface 29 and the further abutment surface 30 are substantially flat.

A positioning step is thus carried out, in which the profiled bars 2, 3 are positioned in a repetitive manner on the welding head 1, by arranging the profiled bars 2, 3 in a predefined position relative to the abutment element 19, with which the terminal sections 18 are in contact.

As a consequence of the contact between the terminal sections 18 and the abutment element 19, the upper containing elements 21 and the lower containing elements 22 (whose ends are normally in a more advanced position relative to the terminal sections 18) are moved backward along the profiled bar 2 or the further profiled bar 3. This occurs because the abutment element 19 exerts on the upper containing elements 21 and on the lower containing elements 22 a force that is sufficient to overcome the force of the elastic elements 49.

In this manner, the upper containing elements 21 and the lower containing elements 22 do not jeopardize correct positioning of the profiled bar 2 and of the further profiled bar 3 on the welding head 1.

Therefore, towards the end of the positioning step, as shown in Figure 3, the upper containing element 21 and the lower containing element 22 of the support device 6 are in contact with the abutment surface 29 of the abutment element 19. The corresponding lower protuberance 26 is housed in the lower seat 28 of the profiled bar 2.

Analogously, the upper containing element 21 and the lower containing element 22 of the further support device 8 are in contact with the further abutment surface 30 of the abutment element 19, the corresponding lower protuberance 26 being housed in the lower seat 28 of the further profiled bar 3.

At this point, the clamping element 16 of the support device 6 is moved in the direction D1 shown in Figure 3 and brought near the support element 13 of the support device 6, until reaching the clamping position, in which the end portion 7 of the profiled bar 2 is clamped onto the support device 6.

Analogously, the further profiled bar 3 is clamped between the support element 13 and the clamping element 16 of the further support device 8, by moving the clamping element 16 in the direction D2 until reaching the clamping position.

The support device 6 and the further support device 8 are now moved away from each other to bring them into the position in Figure 4. In this manner, the terminal sections 18 of the profiled bar 2 and of the further profiled bar 3 are disengaged from the abutment element 19, which can thus be moved away from the profiled bars 2, 3 and repositioned in the casing 5.

It is noted that, after the abutment element 19 has moved away from the profiled bars 2, 3, the elastic element 49 associated with each upper containing element 21 and each lower containing element 22 pushes the corresponding upper 21 or lower 22 containing element beyond the terminal section 18 of the respective profiled bar 2, 3. In other words, as shown in Figure 4, the upper containing element 21 and the lower containing element 22 included in the support device 6 each project by an amount H relative to the terminal surface 18 of the profiled bar 2, towards the further profiled bar 3. An analogous situation occurs for the upper containing element 21 and the lower containing element 22 included in the further support device 8.

Summing up, the step described previously with reference to Figure 4 can be defined as a step of clamping the profiled bars 2, 3 on the corresponding support device 6, 8, moving the profiled bars 2, 3 away from each other and removing the abutment element 19.

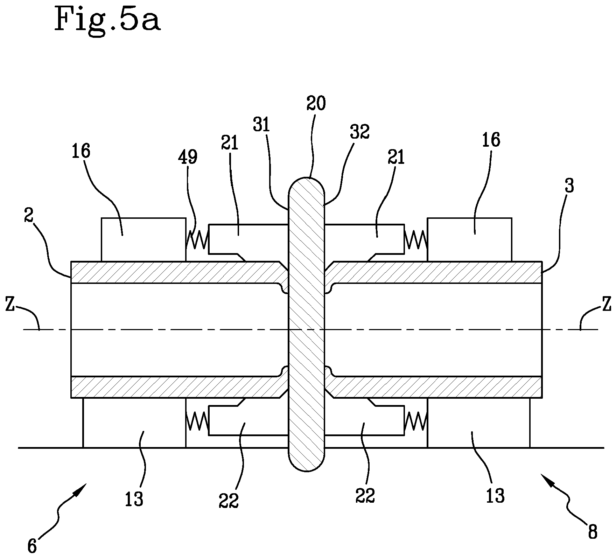

Subsequently, as shown in Figure 5, the heating element 20 is brought outside the casing 5 and inserted between the profiled bar 2 and the further profiled bar 3.

The heating element 20 is delimited by a heating face 31, facing the profiled bar 2, and by a further heating face 32, opposite the heating face 31 and facing the further profiled bar 3.

The driving means associated with the support device 6 moves the profiled bar 2 in order to bring the terminal section 18 of the profiled bar 2 into contact with the heating face 31. Analogously, the further driving means associated with the further support device 8 brings the terminal section 18 of the further profiled bar 3 into contact with the further heating face 32 of the heating element 20.

In this step, the heating element 20 is heated to a pre-established temperature so as to transfer heat to the terminal sections 18 of the profiled bar 2 and of the further profiled bar 3 with which it is in contact. The material forming the profiled bar 2 and the further profiled bar 3 is therefore brought to a relatively high temperature and consequently softened near the terminal sections 18. While the material that forms the profiled bar 2 and the further profiled bar 3 is being softened near the terminal sections 18, the driving means acting upon the support device 6 further pushes the profiled bar 2 towards the heating face 31 of the heating element 20, moving the profiled bar 2 at a controlled speed. The profiled bar 2 is consequently further moved towards the heating face 31, so as to soften a portion of the profiled bar 2 having a pre-established length, measured starting from the original terminal section 18.

Analogously, the further driving means associated with the further support device 8 pushes the further profiled bar 3 towards the heating element 20, moving the further profiled bar 3 at a controlled speed. A portion of the further profiled bar 3 having a pre-established length, measured from the corresponding original terminal section 18, is thus softened.

The step described above can be defined a step of softening the material which forms the profiled bar 2 and the further profiled bar 3 near the terminal sections 18.

During the softening step, the upper containing elements 21 and the lower containing elements 22 are pushed into contact against the heating element 20. The upper containing elements 21 prevent the softened material from flowing above the first face 10, whilst the lower containing elements 22 prevent the softened material from coming out below the second face 11.

The lower protuberances 26 are received in the lower seat 28 of the profiled bar 2 and of the further profiled bar 3, whilst the upper protuberances 25 are received in the upper seat 27 of the profiled bar 2 and of the further profiled bar 3.

The lower protuberances 26 and the upper protuberances 25 displace the softened material towards the inside of the profiled bars 2, 3, i.e. towards the longitudinal axis Z of the profiled bar 2 and of the further profiled bar 3. In other words, the upper protuberances 25 and the lower protuberances 26 act like deflectors which divert the softened material, moving it away from the first face 10 and the second face 11 and sending it towards the inside of the profiled bars 2, 3, which are internally hollow.

After the softening step, i.e. after a portion of a pre-established length of the profiled bar 2 and of the further profiled bar 3 has been softened, the support device 6 and the further support device 8 move away from the heating element 20. Consequently, the profiled bars 2, 3 are detached from the heating element 20, which can now be moved backwards inside the casing 5.

The terminal sections 18 of the profiled bars 2, 3 are now spaced apart from each other. As shown in Figure 6, near each terminal section 18 it is possible to identify an upper portion of softened material 33 and a lower portion of softened material 34.

The upper portion of softened material 33 extends in part towards the inside of the profiled bar 2 or of the further profiled bar 3 and in part towards the outside of the profiled bar 2 or of the further profiled bar 3, without, however, projecting above the first face 10. Analogously, the lower portion of softened material 34 extends in part towards the inside and in part towards the outside of the profiled bar 2 or of the further profiled bar 3, without, however, projecting below the second face 11. The step described above with reference to Figure 6 can thus be defined as a step of reciprocal distancing the profiled bar 2 and the further profiled bar 3, accompanied by removal of the heating element 20.

At the end of this step, the upper containing elements 21 and the lower containing elements 22, pushed by the elastic elements 49 associated therewith, project beyond the terminal section 18 of the profiled bar 2, 3 with which they interact.

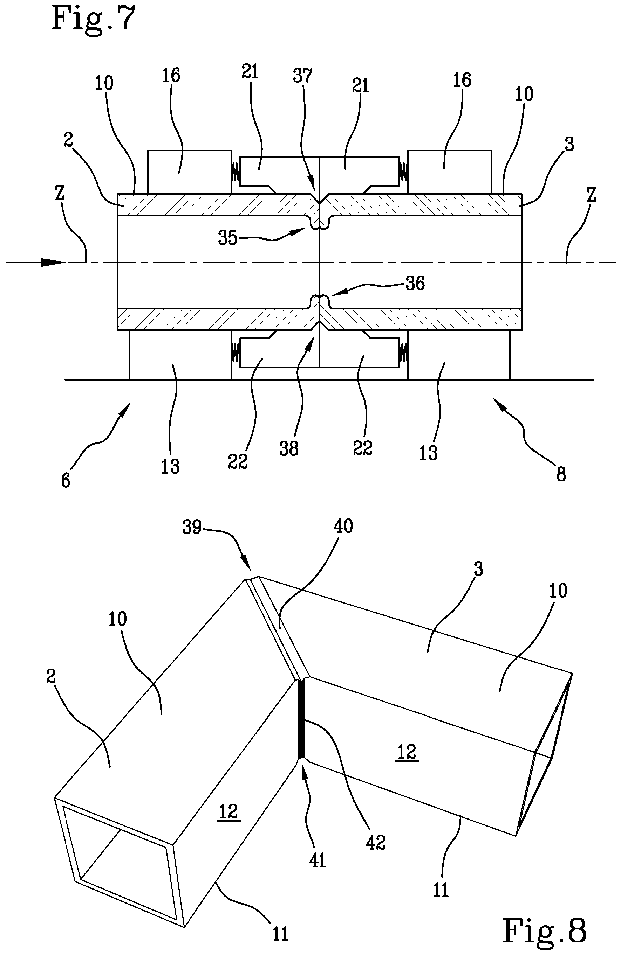

At this point, the support device 6 and the further support device 8, owing to the corresponding driving means and the further driving means, push the profiled bar 2 and the further profiled bar 3 against each other, as shown in Figure 7. The terminal sections 18 of the profiled bar 2 and of the further profiled bar 3 are thus brought into contact with each other.

After the terminal sections 18 of the profiled bar 2 and of the further profiled bar 3 have been brought into reciprocal contact, the profiled bar 2 and the further profiled bar 3 are moved further towards each other. In this manner, a pressure is applied on the profiled bar 2 and on the further profiled bar 3, such as to weld the profiled bar 2 to the further profiled bar 3. Welding takes place by joining the upper portions of softened material 33 and the lower portions of softened material 34.

In particular, the upper portions of softened material 33 give rise to an upper weld bead 35 which joins the profiled bar 2 to the further profiled bar 3 along the respective first faces 10.

The lower portions of softened material 34, on the other hand, give rise to a lower weld bead 36 which joins the profiled bar 2 to the further profiled bar 3 along the respective second faces 11.

During this step, which can be defined as a welding step, the upper containing elements 21 are in reciprocal contact and are pushed against each other. The lower containing elements 22 are also pushed into contact with each other and are arranged in a position of mutual contact.

The upper protuberances 25 are adjacent to each other and together define an upper penetrating portion 37, which penetrates into the upper portions of softened material 33, already in contact with each other.

The upper containing elements 21 thus make it possible to contain the softened material of the profiled bar 2 and of the further profiled bar 3, while simultaneously shaping, owing to the upper protuberances 25, the upper weld bead 35 from the outside.

In particular, the first surfaces 23 of the upper containing elements 21 are very close to the first faces 10 of the profiled bar 2 and of the further profiled bar 3, so as to prevent the softened material from rising above the first faces 10.

The upper penetrating portion 37, defined by the upper protuberances 25, which are in reciprocal contact, pushes the softened material towards the longitudinal axis Z of the profiled bar 2 and of the further profiled bar 3, i.e. towards the inside of the profiled bar 2 and of the further profiled bar 3. In this manner, an upper weld bead 35 is created which extends, practically completely, inside the profiled bar 2 and the further profiled bar 3.

An analogous situation occurs in the joining zone along which the second faces 11 of the profiled bar 2 and of the further profiled bar 3 are joined. In this case as well, the lower containing elements 22 are in reciprocal contact during the welding step, as are the lower protuberances 26. The latter together define a lower penetrating portion 38, which penetrates into the thickness of the profiled bar 2 and of the further bar 3, thus shaping the corresponding joining zone and pushing the lower weld bead 36 entirely towards the inside of the profiled bar 2 and of the further profiled bar 3.

It is noted that, during the welding step, the profiled bar 2 and the further profiled bar 3, in addition to being pushed against each other, are moved towards each other by the driving means associated with the support device 6 and, respectively, by the further driving means associated with the further support device 8, until reaching a predetermined end-of-welding position. While this is occurring, the upper containing elements 21 are maintained constantly in contact with each other, as are the lower containing elements 22. This is made possible by the elastic elements 49 associated with the upper containing elements 21 and the lower containing elements 22, which maintain the upper containing elements 21, as well as the lower containing elements 22, in reciprocal contact so as to prevent undesirable leaks of softened material from the joining zones between the profiled bar 2 and the further profiled bar 3.

During the welding step, the profiled bar 2 and the further profiled bar 3 are joined together also at the lateral faces 12, according to known procedures that will not be described in detail.

Owing to the upper containing elements 21 and the lower containing elements 22, it is possible, in the steps in which the profiled bar 2 and the further profiled bar 3 are in contact with each other, to define a transversally closed space in the joining zone between the profiled bar 2 and the further profiled bar 3.

In particular, at the end of the positioning step shown in Figure 3, two upper closed spaces, not illustrated, and two lower closed spaces 44 are defined, respectively, in the end portions 7 of the profiled bar 2 and of the further profiled bar 3. Each upper closed space is defined between a profiled bar 2, 3, the corresponding upper containing element 21 and the abutment element 19, when the profiled bar 2, 3 is clamped on the corresponding support device 6, 8. Each lower closed space 44 is defined between a profiled bar 2, 3, the corresponding lower containing element 22 and the abutment element 19. The upper closed spaces and the lower closed spaces 44 are closed off in a transversal direction relative to the direction in which the corresponding joining zone extends between the profiled bars 2, 3, whereas they are open at the ends.

During the softening step shown in Figure 5, respective upper closed volumes 45, closed off transversally relative to the direction in which the corresponding joining zone extends, are defined between the profiled bar 2 or the further profiled bar 3, the corresponding upper containing element 21 and the heating element 20. Analogous lower closed volumes 46 are defined between the profiled bar 2 or the further profiled bar 3, the corresponding lower containing element 22 and the heating element 20. Finally, during the welding step, transversely closed spaces are defined between the profiled bar 2, the further profiled bar 3 and, respectively, the upper containing elements 21 or the upper containing elements 22. Owing to the transversely closed spaces or volumes that are generated in the above-described steps, the softened material of the profiled bar 2 and of the further profiled bar 3 can be effectively contained in pre-established regions, thus avoiding undesirable leaks.

After the profiled bar 2 and the further profiled bar 3 have been pushed against each other for the desired time, the welding step ends. The product obtained by joining the profiled bar 2 and the further profiled bar 3 can now be removed from the welding head 1.

A joint 39, shown schematically in Figure 8, is thus obtained between the profiled bar 2 and the further profiled bar 3. It is noted that an upper recess 40 having a "V"-shaped cross section, i.e. a conformation complementary to the shape of the upper penetrating portion 37, is defined in the joining zone between the first faces 10. The upper weld bead 35 is not visible from the outside in said joining zone.

Analogously, a lower recess 41, likewise having a "V"-shaped cross section, i.e. a conformation complementary to the shape of the lower penetrating portion 36 which generated it, is defined in the joining zone between the second faces 11.

In the joining zones between the lateral faces 12, by contrast, lateral weld beads 42 are visible, one of which is shown in Figure 8. The lateral weld beads 42 are intended to be covered after installation of the window or door frame, for example by a wall or a glass pane, and their presence is therefore not problematic.

The upper recess 40 and the lower recess 41 can also have shapes differing from the one shown in Figure 8. In fact, the shape of the upper recess 40 and of the lower recess 41 depends on the shape of the upper protuberances 25 and of the lower protuberances 26, so that modifying the shape of the upper protuberances 25 and of the lower protuberances 26 will also change the geometry of the upper recess 40 and of the lower recess 41.

For example, the upper protuberances 25 and the lower protuberances 26, instead of each being shaped like a half "V" as in the illustrated example, could be shaped, in cross section, like a circular portion, so as to give rise to semi-cylindrical recesses. Other geometries are possible for the upper protuberances 25 and the lower protuberances 26, depending on the shape desired for the upper recess 40 and for the lower recess 41.

The upper containing elements 21 and the lower containing elements 22 make it possible to obtain joining zones having an aesthetically pleasing appearance, in which the weld bead (in detail, the upper weld bead 35 or the lower weld bead 36) is practically invisible from the outside.

It is thus not necessary to carry out operations of cleaning, i.e. eliminating the part of the weld bead that would be visible after installation of the window or door, which enables the production of windows and doors and the associated production lines to be simplified.

The upper protuberances 25 and the lower protuberances 26, besides effectively pushing the softened material towards the inside of the profiled bar 2 and of the further profiled bar 3, enable the corresponding joining zone to be shaped according to a pre-established geometry.

If a film is applied on the outer surface of the profiled bar 2 and of the further profiled bar 3, for example in order to give a desired surface finish to the profiled bar 2 or to the further profiled bar 3, the upper protuberances 25 and the lower protuberances 26 fold the film towards the inside of the profiled bar 2 and of the further profiled bar 3, without damaging said film. Consequently, the surface finish given to the profiled bar 2 and to the further profiled bar 3 also remains present in the upper recess 40 and in the lower recess 41, which enables a high quality joint 39 to be obtained.

In an alternative embodiment, the operating parameters of the welding head 1 can be set, without introducing significant structural modifications to the welding head 1, in such a way that, at the end of the softening step, the situation shown in Figure 5a occurs rather than the situation shown in Figure 5.

In this case, at the end of the softening step, the upper seats 27 and the lower seats 28 have been completely filled by the softened material which is diverted towards the inside of the profiled bar 2 and of the further profiled bar 3 by the upper protuberances 25 and the lower protuberances 26.

After the softening step shown in Figure 5a, therefore, it is not possible to identify the upper closed volumes 45 and the lower closed volumes 46, which were visible, by contrast, in the version in Figure 5.

The situation shown in Figure 5a can be reached by appropriately selecting the dimension D and the depth P of each upper seat 27, the dimension D' and the depth P' of each lower seat 28, the stroke of the driving means associated with the support device 6 in order to move the profiled bar 2 towards the heating element 20, the stroke of the further driving means associated with the further support device 8 in order to move the further profiled bar 3 towards the heating element 20, and, if necessary, the geometric and dimensional characteristics of the upper protuberances 25 and of the lower protuberances 26.

It is noted that the solution described above with reference to Figures 1 to 8 is constructively very simple. In particular, by providing containing elements 21, 22 that are movable in a floating manner against the resistance of an elastic element, it is possible to avoid using complicated driving devices for moving the containing elements 21, 22.

Furthermore, the containing elements 21, 22 can be easily replaced with containing elements of different shapes or sizes in order to modify the conformation of the joining zones between the profiled bar 2 and the further profiled bar 3.

In addition, the support devices 6, 8 can be easily replaced with support devices of a traditional type, i.e. without any floating containing elements, in the event that it is desired to perform traditional welding. This replacement does not require prolonged machine shutdowns or particularly complicated operations on the welding head 1.

The welding head 1 is thus extremely flexible and adaptable to a variety of production needs.

## Claims

1. An apparatus for joining a profiled bar (2) and a further profiled bar (3) by welding, comprising:
- a support device (6) for supporting an end portion (7) of the profiled bar (2);
- a further support device (8) for supporting a further end portion (9) of the further profiled bar (3);
- a heating device for heating respective terminal sections (18) of the end portion (7) and of the further end portion (9), so as to locally soften the material of the profiled bar (2) and of the further profiled bar (3);
- pusher means for pushing at least the profiled bar (2) against the further profiled bar (3), so as to join the profiled bar (2) and the further profiled bar (3) at the respective softened terminal sections (18);
wherein at least a device selected from between the support device (6) and the further support device (8) comprises a containing element (21, 22) for containing the softened material during welding, the containing element (21, 22) being floating along a direction parallel to a longitudinal axis (Z) of the corresponding profiled bar (2, 3), wherein the containing element (21, 22) is provided with a protuberance (25, 26) that projects towards the longitudinal axis (Z) of the corresponding profiled bar (2, 3) near the respective terminal section (18), whereby the containing element (21, 22) acts like a deflector pushing the softened material towards the inside of the corresponding profiled bar (2, 3), **characterized in that** the protuberance (25, 26) is configured for creating a recess (40) having a conformation complementary to the shape of the protuberance (25,26) in a joining zone between the profiled bar (2) and the further profiled bar (3).

2. An apparatus according to claim 1, wherein an elastic element (49) is associated to the containing element (21, 22), the elastic element (49) being arranged for maintaining the containing element (21, 22) in an extended position, the containing element (21, 22) being retractable parallel to the longitudinal axis (Z) of the corresponding profiled bar (2, 3) in opposition to the action of the elastic element (49).

3. An apparatus according to claim 1 or 2, wherein the containing element (21, 22) is delimited by a surface (23, 24) which is slidable near a face (10, 11) of the corresponding profiled bar (2, 3), said face (10, 11) being delimited by an edge along which the profiled bar (2) and the further profiled bar (3) are intended to be joined to one another.

4. An apparatus according to claim 3, wherein the containing element (21, 22) is delimited by an abutment face (47, 48) arranged transversely to said surface (23, 24).

5. An apparatus according to any preceding claim, wherein the protuberance (25, 26) is dimensioned so as to be selectively received in a seat (27, 28) of the profiled bar (2) or of the further profiled bar (3).

6. An apparatus according to claim 5, as appended to claim 4, wherein the protuberance (25, 26) projects from said surface (23, 24) and is interposed between said surface (23, 24) and the abutment face (47, 48).

7. An apparatus according to any preceding claim, wherein two containing elements (21, 22) are provided, the two containing elements (21, 22) being arranged for engaging respectively with the profiled bar (2) and with the further profiled bar (3) near the respective end sections (18).

8. An apparatus according to claim 7, as appended to claim 4, wherein the abutment faces (47, 48) of said two containing elements (21, 22) are configured to abut against one another in a welding step, so that the corresponding protuberances (25, 26) are arranged side by side to define a penetrating portion (37, 38) which penetrates into the softened material near the terminal sections (18), thereby defining conformation of the joining zone between the profiled bar (2) and the further profiled bar (3).

9. An apparatus according to any preceding claim, and further comprising an abutment element (19) insertable between the profiled bar (2) and the further profiled bar (3) in a positioning step for reciprocally positioning the profiled bar (2) and the further profiled bar (3) before welding.

10. An apparatus according to claim 9, as appended to claim 4, wherein the abutment face (47, 48) of the containing element (21, 22) is configured to abut against the abutment element (19) in the positioning step.

11. An apparatus according to any preceding claim, wherein the heating device comprises a heating element (20) insertable between the profiled bar (2) and the further profiled bar (3) for softening the corresponding end sections (18) in a softening step.

12. An apparatus according to claim 11, as appended to claim 4, wherein the abutment face (47, 48) of the containing element (21, 22) is configured to abut against the heating element (20) in the softening step.

13. An apparatus according to any preceding claim, wherein a pair of containing elements (21) and a further pair of containing elements (22) are provided, the pair of containing elements (21) being active in a joining zone on first faces (10) of the profiled bar (2) and the further profiled bar (3), the further pair of containing elements (22) being active in a further joining zone on second faces (11) of the profiled bar (2) and the further profiled bar (3).

14. A method for joining a profiled bar (2) and a further profiled bar (3) by welding, comprising:
- supporting an end portion (7) of the profiled bar (2) by means of a support device (6);
- supporting a further end portion (9) of the further profiled bar (3) by means of a further support device (8);
- heating respective terminal sections (18) of the end portion (7) and of the further end portion (9) by means of a heating device, so as to locally soften the material of the profiled bar (2) and of the further profiled bar (3);
- pushing at least the profiled bar (2) against the further profiled bar (3) by using pusher means, so as to join the profiled bar (2) and the further profiled bar (3) at the respective softened terminal sections (18);
wherein at least a device selected from between the support device (6) and the further support device (8) comprises a containing element (21, 22) which contains the softened material during welding, the containing element (21, 22) being floating along a direction parallel to a longitudinal axis (Z) of the corresponding profiled bar (2, 3), the containing element (21, 22) being provided with a protuberance (25, 26) that projects towards the longitudinal axis (Z) of the corresponding profiled bar (2, 3) near the respective terminal section (18), whereby the containing element (21, 22) acts like a deflector which pushes the softened material towards the inside of the corresponding profiled bar (2, 3), **characterized in that** the protuberance (25, 26) creates a recess (40) having a conformation complementary to the shape of the protuberance (25,26) in a joining zone between the profiled bar (2) and the further profiled bar (3).

15. A method according to claim 14, wherein the protuberance (25, 26) is housed in a seat (27, 28) at the terminal section (18) of the corresponding profiled bar (2, 3).

## Patentansprüche

1. Vorrichtung zum Zusammenfügen eines Profilstabs (2) und eines weiteren Profilstabs (3) durch Schweißen, umfassend:
- eine Stützvorrichtung (6) zum Stützen eines Endabschnitts (7) des Profilstabs (2);
- eine weitere Stützvorrichtung (8) zum Stützen eines weiteren Endabschnitts (9) des weiteren Profilstabs (3);
- eine Heizvorrichtung zum Erhitzen jeweiliger Abschlusssektionen (18) des Endabschnitts (7) und des weiteren Endabschnitts (9), um das Material des Profilstabs (2) und des weiteren Profilstabs (3) lokal zu erweichen;
- Druckmittel zum Drücken zumindest des Profilstabs (2) gegen den weiteren Profilstab (3), um den Profilstab (2) und den weiteren Profilstab (3) an den jeweiligen erweichten Abschlusssektionen (18) zusammenzufügen,
wobei zumindest eine zwischen der Stützvorrichtung (6) und der weiteren Stützvorrichtung (8) ausgewählte Vorrichtung ein Enthalteelement (21, 22) zum Enthalten des erweichten Materials während des Schweißens umfasst, wobei das Enthalteelement (21, 22) entlang einer Richtung parallel zu einer Längsachse (Z) des entsprechenden Profilstabs (2, 3) schwebt, wobei das Enthalteelement (21, 22) mit einem Vorsprung (25, 26) versehen ist, die in Richtung der Längsachse (Z) des entsprechenden Profilstabs (2, 3) in der Nähe der jeweiligen Abschlusssektion (18) vorsteht, wodurch das Enthalteelement (21, 22) wie ein Deflektor wirkt, der das erweichte Material in Richtung des Inneren des entsprechenden Profilstabs (2, 3) drückt, **dadurch gekennzeichnet, dass** der Vorsprung (25, 26) zum Erzeugen einer Aussparung (40) mit einer zur Form des Vorsprungs (25, 26) komplementären Formgebung in einer Fügezone zwischen dem Profilstab (2) und dem weiteren Profilstab (3) auslegt ist.

2. Vorrichtung nach Anspruch 1, wobei ein elastisches Element (49) mit dem Enthalteelement (21, 22) assoziiert ist, wobei das elastische Element (49) angeordnet ist, um das Enthalteelement (21, 22) in einer ausgefahrenen Position zu halten, wobei das Enthalteelement (21, 22) entgegen der Wirkung des elastischen Elements (49) parallel zur Längsachse (Z) des entsprechenden Profilstabs (2, 3) zurückziehbar ist.

3. Vorrichtung nach Anspruch 1 oder 2, wobei das Enthalteelement (21, 22) durch eine Oberfläche (23, 24) begrenzt ist, die in der Nähe einer Fläche (10, 11) des entsprechenden Profilstabs (2, 3) verschiebbar ist, wobei die Fläche (10, 11) durch eine Kante begrenzt ist, entlang der der Profilstab (2) und der weitere Profilstab (3) miteinander zusammengefügt werden sollen.

4. Vorrichtung nach Anspruch 3, wobei das Enthalteelement (21, 22) durch eine quer zu der Oberfläche (23, 24) angeordnete Anlagefläche (47, 48) begrenzt ist.

5. Vorrichtung nach einem der vorhergehenden Ansprüche, wobei der Vorsprung (25, 26) so bemessen ist, dass er selektiv in einer Aufnahme (27, 28) des Profilstabs (2) oder des weiteren Profilstabs (3) aufgenommen wird.

6. Vorrichtung nach Anspruch 5, in Abhängigkeit von Anspruch 4, wobei der Vorsprung (25, 26) von der Oberfläche (23, 24) vorsteht und zwischen der Oberfläche (23, 24) und der Anlagefläche (47, 48) angeordnet ist.

7. Vorrichtung nach einem der vorhergehenden Ansprüche, wobei zwei Enthalteelemente (21, 22) vorgesehen sind, wobei die beiden Enthalteelemente (21, 22) zum Eingriff jeweils mit dem Profilstab (2) und mit dem weiteren Profilstab (3) in der Nähe der jeweiligen Endsektionen (18) angeordnet sind.

8. Vorrichtung nach Anspruch 7, in Abhängigkeit von Anspruch 4, wobei die Anlageflächen (47, 48) der zwei Enthalteelemente (21, 22) so ausgelegt sind, dass sie in einem Schweißschritt gegeneinander anliegen, so dass die entsprechenden Vorsprünge (25, 26) nebeneinander angeordnet sind, um einen Eindringabschnitt (37, 38) zu definieren, der in das erweichte Material in der Nähe der Abschlusssektionen (18) eindringt, wodurch eine Formgebung der Fügezone zwischen dem Profilstab (2) und dem weiteren Profilstab (3) definiert wird.

9. Vorrichtung nach einem der vorhergehenden Ansprüche, ferner umfassend ein Anlageelement (19), das zwischen den Profilstab (2) und den weiteren Profilstab (3) in einem Positionierschritt einführbar ist, um den Profilstab (2) und den weiteren Profilstab (3) vor dem Schweißen wechselseitig zu positionieren.

10. Vorrichtung nach Anspruch 9, in Abhängigkeit von Anspruch 4, wobei die Anlagefläche (47, 48) des Enthalteelements (21, 22) so ausgelegt ist, dass sie beim Positionierschritt gegen das Anlageelement (19) anliegt.

11. Vorrichtung nach einem der vorhergehenden Ansprüche, wobei die Heizvorrichtung ein Heizelement (20) umfasst, das zwischen den Profilstab (2) und den weiteren Profilstab (3) einführbar ist, um die entsprechenden Endsektionen (18) in einem Erweichungsschritt zu erweichen.

12. Vorrichtung nach Anspruch 11, in Abhängigkeit von Anspruch 4, wobei die Anlagefläche (47, 48) des Enthalteelements (21, 22) so ausgelegt ist, dass sie beim Erweichungsschritt gegen das Heizelement (20) anliegt.

13. Vorrichtung nach einem der vorhergehenden Ansprüche, wobei ein Paar von Enthalteelementen (21) und ein weiteres Paar von Enthalteelementen (22) vorgesehen sind, wobei das Paar von Enthalteelementen (21) in einer Fügezone an ersten Flächen (10) des Profilstabs (2) und des weiteren Profilstabs (3) aktiv ist, wobei das weitere Paar von Enthalteelementen (22) in einer weiteren Fügezone an zweiten Flächen (11) des Profilstabs (2) und des weiteren Profilstabs (3) aktiv ist.

14. Verfahren zum Zusammenfügen eines Profilstabs (2) und eines weiteren Profilstabs (3) durch Schweißen, umfassend:
- Stützen eines Endabschnitts (7) des Profilstabs (2) mittels einer Stützvorrichtung (6);
- Stützen eines weiteren Endabschnitts (9) des weiteren Profilstabs (3) mittels einer weiteren Stützvorrichtung (8);
- Erhitzen jeweiliger Abschlusssektionen (18) des Endabschnitts (7) und des weiteren Endabschnitts (9) mittels einer Heizvorrichtung, um das Material des Profilstabs (2) und des weiteren Profilstabs (3) lokal zu erweichen;
- Drücken zumindest des Profilstabs (2) gegen den weiteren Profilstab (3) unter Verwendung von Druckmitteln, um den Profilstab (2) und den weiteren Profilstab (3) an den jeweiligen erweichten Abschlusssektionen (18) zusammenzufügen,
wobei zumindest eine zwischen der Stützvorrichtung (6) und der weiteren Stützvorrichtung (8) ausgewählte Vorrichtung ein Enthalteelement (21, 22) umfasst, das während des Schweißens das erweichte Material enthält, wobei das Enthalteelement (21, 22) entlang einer Richtung parallel zu einer Längsachse (Z) des entsprechenden Profilstabs (2, 3) schwebt, wobei das Enthalteelement (21, 22) mit einem Vorsprung (25, 26) versehen ist, die in Richtung der Längsachse (Z) des entsprechenden Profilstabs (2, 3) in der Nähe der jeweiligen Abschlusssektion (18) vorsteht, wodurch das Enthalteelement (21, 22) wie ein Deflektor wirkt, der das erweichte Material in Richtung des Inneren des entsprechenden Profilstabs (2, 3) drückt, **dadurch gekennzeichnet, dass** der Vorsprung (25, 26) in einer Fügezone zwischen dem Profilstab (2) und dem weiteren Profilstab (3) eine Aussparung (40) mit einer zur Form des Vorsprungs (25, 26) komplementären Formgebung erzeugt.

15. Verfahren nach Anspruch 14, wobei der Vorsprung (25, 26) in einer Aufnahme (27, 28) an der Abschlusssektion (18) des entsprechenden Profilstabs (2, 3) untergebracht ist.

## Revendications

1. Appareil de jonction d'une barre profilée (2) et d'une barre profilée (3) supplémentaire par soudage, comprenant :
- un dispositif de support (6) pour supporter une partie d'extrémité (7) de la barre profilée (2) ;
- un dispositif de support (8) supplémentaire pour supporter une partie d'extrémité (9) supplémentaire de la barre profilée (3) supplémentaire ;
- un dispositif de chauffage pour chauffer des sections terminales (18) respectives de la partie d'extrémité (7) et de la partie d'extrémité (9) supplémentaire, de manière à ramollir localement le matériau de la barre profilée (2) et de la barre profilée (3) supplémentaire ;
- des moyens poussoirs pour pousser au moins la barre profilée (2) contre la barre profilée (3) supplémentaire, de manière à joindre la barre profilée (2) et la barre profilée (3) supplémentaire en correspondance des sections terminales (18) ramollies respectives ;
dans lequel au moins un dispositif choisi entre le dispositif de support (6) et le dispositif de support (8) supplémentaire comprend un élément de contenance (21, 22) pour contenir le matériau ramolli pendant le soudage, l'élément de contenance (21, 22) étant flottant le long d'une direction parallèle à un axe longitudinal (Z) de la barre profilée (2, 3) correspondante, dans lequel l'élément de contenance (21, 22) est pourvu d'une protubérance (25, 26) qui dépasse vers l'axe longitudinal (Z) de la barre profilée (2, 3) correspondante près de la section terminale (18) respective, où l'élément de contenance (21, 22) agit comme un déflecteur poussant le matériau ramolli vers l'intérieur de la barre profilée (2, 3) correspondante, **caractérisé en ce que** la protubérance (25, 26) est configurée pour créer un renfoncement (40) ayant une conformation complémentaire à la forme de la protubérance (25, 26) dans une zone de jonction entre la barre profilée (2) et la barre profilée (3) supplémentaire.

2. Appareil selon la revendication 1, dans lequel un élément élastique (49) est associé à l'élément de contenance (21, 22), l'élément élastique (49) étant disposé pour maintenir l'élément de contenance (21, 22) dans une position étendue, l'élément de contenance (21, 22) étant rétractable parallèlement à l'axe longitudinal (Z) de la barre profilée (2, 3) correspondante en opposition à l'action de l'élément élastique (49).

3. Appareil selon la revendication 1 ou 2, dans lequel l'élément de contenance (21, 22) est délimité par une surface (23, 24) qui peut coulisser près d'une face (10, 11) de la barre profilée (2, 3) correspondante, ladite face (10, 11) étant délimitée par un bord le long duquel la barre profilée (2) et la barre profilée (3) supplémentaire sont destinées à être jointes l'une à l'autre.

4. Appareil selon la revendication 3, dans lequel l'élément de contenance (21, 22) est délimité par une face de butée (47, 48) disposée transversalement à ladite surface (23, 24).

5. Appareil selon l'une quelconque des revendications précédentes, dans lequel la protubérance (25, 26) est dimensionnée de manière à être reçue sélectivement dans un siège (27, 28) de la barre profilée (2) ou de la barre profilée (3) supplémentaire.

6. Appareil selon la revendication 5, lorsqu'elle est rattachée à la revendication 4, dans lequel la protubérance (25, 26) dépasse de ladite surface (23, 24) et est interposée entre ladite surface (23, 24) et la face de butée (47, 48).

7. Appareil selon l'une quelconque des revendications précédentes, dans lequel deux éléments de contenance (21, 22) sont prévus, les deux éléments de contenance (21, 22) étant disposés pour se mettre en prise respectivement avec la barre profilée (2) et avec la barre profilée (3) supplémentaire à proximité des sections d'extrémité (18) respectives.

8. Appareil selon la revendication 7, lorsqu'elle est rattachée à la revendication 4, dans lequel les faces de butée (47, 48) desdits deux éléments de contenance (21, 22) sont configurées pour venir se mettre en butée l'une contre l'autre dans une étape de soudage, de sorte que les protubérances (25, 26) correspondantes sont disposées côte à côte pour définir une partie pénétrante (37, 38) qui pénètre dans le matériau ramolli près des sections terminales (18), définissant ainsi la conformation de la zone de jonction entre la barre profilée (2) et la barre profilée (3) supplémentaire.

9. Appareil selon l'une quelconque des revendications précédentes, comprenant de plus un élément de butée (19) insérable entre la barre profilée (2) et la barre profilée (3) supplémentaire lors d'une étape de positionnement pour positionner réciproquement la barre profilée (2) et la barre profilée (3) supplémentaire avant soudage.

10. Appareil selon la revendication 9, lorsqu'elle est rattachée à la revendication 4, dans lequel la face de butée (47, 48) de l'élément de contenance (21, 22) est configurée pour venir se mettre en butée contre l'élément de butée (19) lors de l'étape de positionnement.

11. Appareil selon l'une quelconque des revendications précédentes, dans lequel le dispositif de chauffage comprend un élément chauffant (20) insérable entre la barre profilée (2) et la barre profilée (3) supplémentaire pour ramollir les sections d'extrémité (18) correspondantes lors d'une étape de ramollissement.

12. Appareil selon la revendication 11, lorsqu'elle est rattachée à la revendication 4, dans lequel la face de butée (47, 48) de l'élément de contenance (21, 22) est configurée pour venir se mettre en butée contre l'élément chauffant (20) lors de l'étape de ramollissement.

13. Appareil selon l'une quelconque des revendications précédentes, dans lequel une paire d'éléments de contenance (21) et une paire d'éléments de contenance (22) supplémentaire sont prévues, la paire d'éléments de contenance (21) étant active dans une zone de jonction sur les premières faces (10) de la barre profilée (2) et de la barre profilée (3) supplémentaire, la paire d'éléments de contenance (22) étant active dans une zone de jonction supplémentaire sur les deuxièmes faces (11) de la barre profilée (2) et de la barre profilée (3) supplémentaire.

14. Procédé de jonction d'une barre profilée (2) et d'une barre profilée (3) supplémentaire par soudage, comprenant :
- supporter une partie d'extrémité (7) de la barre profilée (2) au moyen d'un dispositif de support (6) ;
- supporter une partie d'extrémité (9) supplémentaire de la barre profilée (3) supplémentaire au moyen d'un dispositif de support (8) supplémentaire ;
- chauffer les sections terminales (18) respectives de la partie d'extrémité (7) et de la partie d'extrémité (9) supplémentaire au moyen d'un dispositif de chauffage, de manière à ramollir localement le matériau de la barre profilée (2) et de la barre profilée (3) supplémentaire ;
- pousser au moins la barre profilée (2) contre la barre profilée (3) supplémentaire à l'aide de moyens poussoirs, de manière à joindre la barre profilée (2) et la barre profilée (3) supplémentaire en correspondance des sections terminales (18) ramollies respectives ;
dans lequel au moins un dispositif choisi entre le dispositif de support (6) et le dispositif de support (8) supplémentaire comprend un élément de contenance (21, 22) qui contient le matériau ramolli pendant le soudage, l'élément de contenance (21, 22) étant flottant le long d'une direction parallèle à un axe longitudinal (Z) de la barre profilée (2, 3) correspondante, l'élément de contenance (21, 22) étant pourvu d'une protubérance (25, 26) qui dépasse vers l'axe longitudinal (Z) de la barre profilée (2, 3) correspondante près de la section terminale (18) respective, où l'élément de contenance (21, 22) agit comme un déflecteur qui pousse le matériau ramolli vers l'intérieur de la barre profilée (2, 3) correspondante, **caractérisé en ce que** la protubérance (25, 26) crée un renfoncement (40) ayant une conformation complémentaire à la forme de la protubérance (25, 26) dans une zone de jonction entre la barre profilée (2) et la barre profilée (3) supplémentaire.

15. Procédé selon la revendication 14, dans lequel la protubérance (25, 26) est logée dans un siège (27, 28) en correspondance de la section terminale (18) de la barre profilée (2, 3) correspondante.
